# EUROPÄISCHE PATENTANMELDUNG

(11) **EP 4 068 583 A2**
(43) Veröffentlichungstag der Anmeldung: **05.10.2022**
(21) Anmeldenummer: 22164190.5
(22) Anmeldetag: 24.03.2022
(51) Int. Cl.: H02K 5/20

(54) **ELEKTRISCHE MASCHINE MIT EINER HÜLSE AM ENDABSCHNITT EINES ROTORS**

(30) Priorität: 31.03.2021 DE 102021203303
(71) Anmelder: Valeo eAutomotive Germany GmbH, 91056 Erlangen (DE)
(72) Erfinder: Dietz, Andreas, 97616 c/o VSeA, Bad Neustadt a.d.Saale (DE); Holzheimer, Philipp, 97616 c/o VSeA, Bad Neustadt a.d.Saale (DE)
(74) Vertreter: Valeo Powertrain Systems

(57) **Zusammenfassung**

Elektrische Maschine (1), umfassend: ein Gehäuse (2), in dem ein Stator (3) und ein bezüglich des Stators (3) drehbarer Rotor (4) aufgenommen sind, eine Kühleinrichtung mit einem von einem Kühlmittel durchströmbaren Kühlkanal (5), der sich von einem Einlass (7) durch das Gehäuse (2) und durch den Rotor (4) bis zu einem Auslass (6) erstreckt, und eine Abdichteinrichtung (21) zum Abdichten des Rotors (4) gegenüber einem Innenraum (22) des Gehäuses (2), wobei ein Endabschnitt des Rotors (4) von einer Hülse (10) umgeben ist, die von einem Radialwellendichtring (11) der Abdichteinrichtung (21) umgeben ist. Daneben werden ein Antriebsstrang für ein Fahrzeug (17), ein derartiges Fahrzeug (17) und ein Verfahren zum Betreiben der elektrischen Maschine (1) beschrieben.

## Beschreibung

Die Erfindung betrifft eine elektrische Maschine, umfassend ein Gehäuse, in dem ein Stator und ein bezüglich des Stators drehbarer Rotor aufgenommen sind, eine Kühleinrichtung mit einem von einem Kühlmittel durchströmbaren Kühlkanal, der sich von einem Einlass durch das Gehäuse und durch den Rotor bis zu einem Auslass erstreckt, und eine Abdichteinrichtung zum Abdichten des Rotors gegenüber einem Innenraum des Gehäuses.

Elektrische Maschinen dieser Art werden in zunehmendem Maße bei elektrisch angetriebenen Fahrzeugen oder Hybridfahrzeugen verwendet. Die elektrische Maschine wird dabei überwiegend als Elektromotor für den Antrieb eines Rads oder einer Achse des Fahrzeugs eingesetzt. Der Elektromotor kann unter anderem als Synchronmotor oder Asynchronmotor ausgebildet sein.

Der Elektromotor ist zumeist mechanisch mit einem Getriebe zur Drehzahlanpassung gekoppelt. Daneben ist der Elektromotor in der Regel elektrisch mit einem Wechselrichter verbunden, der aus einer von einer Batterie gelieferten Gleichspannung eine Wechselspannung für den Betrieb der elektrischen Maschine erzeugt, beispielsweise eine mehrphasige Wechselspannung.

Es ist auch möglich, die elektrische Maschine als Generator zur Rekuperation von Bewegungsenergie eines Fahrzeugs zu betreiben, wobei die Bewegungsenergie zunächst in elektrische Energie und dann in chemische Energie der Batterie umgewandelt wird.

Der Rotor der elektrischen Maschine verfügt normalerweise über eine Rotorwelle, die von einem zylinderförmigen Rotorkörper umschlossen ist. Der Rotorkörper kann neben einem Paket laminierter Metallbleche unter anderem Permanentmagneten oder eine Wicklung mit einem elektrischen Leiter aufweisen. Aufgrund der beim Betrieb der elektrischen Maschine entstehenden Wärme weist diese eine Kühleinrichtung zum Abführen der Wärme auf, die einen von einem flüssigem Kühlmittel durchströmbaren Kühlkanal umfasst. Der Kühlkanal erstreckt sich von einem Einlass durch das Gehäuse der elektrischen Maschine und weiter durch den Rotor bis zu einem Auslass, der in dem Gehäuse ausgebildet ist. Das Kühlmittel, bei dem es sich beispielsweise um eine Wasser-Glykol-Mischung handelt, wird in einem Kreislauf gefördert.

Eine Abdichteinrichtung dichtet den Rotor gegenüber dem Innenraum des Gehäuses ab. Insbesondere ist der mit Kühlmittel gefüllte Kühlkanal, welcher durch den Rotor verläuft, gegenüber dem Innenraum abgedichtet, damit kein Kühlmittel aus dem Kühlkanal in den Innenraum gelangen und dort zu einem Schaden führen kann, beispielsweise durch Korrosion. Der Innenraum kann unter anderem den Stator aufnehmen und ansonsten mit Luft gefüllt sein.

Die Abdichteinrichtung kann unter anderem einen Radialwellendichtring aufweisen, der auf der Rotorwelle gleitet und diese in Radialrichtung gegenüber dem Innenraum abdichtet. Damit wird vermieden, dass Kühlmittelleckage aus der Rotorwelle in den Innenraum des Gehäuses eindringt und dort zu einem Schaden führt. Der Schaden kann insbesondere in Korrosion an einer Wicklung eines Stators bestehen, der in dem Innenraum angeordnet ist.

Allerdings kann Verschleiß an dem Radialwellendichtring beziehungsweise dem von der Radialwellendichtung umgebenen Abschnitt der Rotorwelle auftreten, wodurch die Dichtfunktion des Radialwellendichtrings beeinträchtigt wird.

Ferner kann an dem Abschnitt der Rotorwelle, welcher von dem Radialwellendichtring umgeben ist, Korrosion auftreten. Dadurch können Rostpartikel in den Innenraum des Gehäuses gelangen und dort ebenfalls zu einem Schaden führen.

Die genannten Schäden können den störungsfreien Betrieb der elektrischen Maschine beeinträchtigen, insbesondere über einen langen Zeitraum.

Der Erfindung liegt die Aufgabe zugrunde, eine elektrische Maschine anzugeben, die über einen langen Zeitraum störungsfrei betrieben werden kann.

Zur Lösung dieser Aufgabe ist bei einer elektrischen Maschine der eingangs genannten Art erfindungsgemäß vorgesehen, dass ein Endabschnitt des Rotors von einer Hülse umgeben ist, die von einem Radialwellendichtring der Abdichteinrichtung umgeben ist.

Die Erfindung beruht auf der Erkenntnis, dass die Hülse sowohl den vom Radialwellendichtring umgebenen Abschnitt der Rotorwelle schützt als auch eine geeignete Oberfläche bereitstellt, auf welcher der Radialwellendichtring gleiten kann. Mit anderen Worten bildet die Hülse eine glatte Lauffläche für den Radialwellendichtring, die sich durch ihre Oberflächengüte und -härte auszeichnet. Somit ist die Hülse das geeignete Gegenstück für den Radialwellendichtring.

Auf diese Weise werden Verschleiß und Korrosion vermieden, so dass die Maschine über einen langen Zeitraum störungsfrei betrieben werden kann, insbesondere mit hohen Drehzahlen.

Der von der Hülse umgebene Endabschnitt des Rotors gehört vorzugsweise zu einer Rotorwelle des Rotors. Weiterhin verläuft der Kühlkanal der elektrischen Maschine vorzugsweise durch eine Rotorwelle des Rotors. Es ist jedoch auch denkbar, dass der Kühlkanal durch einen anderen Bestandteil des Rotors verläuft, zum Beispiel durch einen Rotorkörper des Rotors

Vorzugsweise ist die Abdichteinrichtung zum Abdichten des Rotors in eine Radialrichtung und eine Axialrichtung ausgebildet. Dadurch wird vermieden, dass Kühlmittel in Bereiche außerhalb der Kühleinrichtung gelangt, etwa in ein Lager der Rotorwelle. Insbesondere wird eine gegebenenfalls auftretende technische Leckage durch die Abdichteinrichtung aufgehalten.

Die Abdichtung in Radialrichtung kann mit dem Radialwellendichtring realisiert sein, welcher damit als Sekundärdichtung fungiert. Die Abdichtung in Axialrichtung kann mit einer Gleitringdichtung realisiert sein, die ebenfalls zu der Abdichteinrichtung gehört und als Primärdichtung fungiert.

Eine Weiterbildung der Erfindung sieht vor, dass die Oberflächenrauheit der Hülse 0,1 bis 0,32 µm beträgt. Diese geringe Oberflächenrauheit stellt sicher, dass die Gleitbewegung des Radialwellendichtrings auf der Hülse reibungsarm und ohne Abrieb erfolgt, wodurch eine ausreichende Dichtwirkung bei minimalem Verschleiß sichergestellt wird. Vorzugsweise ist die Hülse drallfrei geschliffen.

Eine bevorzugte Ausgestaltung der Erfindung sieht vor, dass die Hülse aus einer nichtrostenden Stahllegierung hergestellt ist. Auf diese Weise kann sichergestellt werden, dass keine Rostpartikel in den Innenraum des Gehäuses gelangen.

Als Werkstoff zur Herstellung der Hülse eignen sich insbesondere härtbare Chromstähle, insbesondere nichtrostende martensitische Chromstähle gemäß der Werkstoffnummer 1.4034 oder 1.4035.

Besonders vorteilhaft ist es, wenn die Hülse gehärtet ist. Dadurch wird der Verschleiß vermindert und die ordnungsgemäße Funktion des Radialwellendichtrings bleibt über einen langen Zeitraum gewährleistet.

Alternativ dazu oder zusätzlich kann die Hülse eine Beschichtung aufweisen, beispielsweise eine Diamantbeschichtung, die der Hülse eine besonders hohe Härte verleiht und somit deren Verschleißfestigkeit erhöht. Die Beschichtung kann zum Beispiel DLC (Diamant Like Carbon) oder eine Emaillierung aufweisen. Derartige Beschichtungen zeichnen sich durch eine geringe Rauheit aus.

Bei der erfindungsgemäßen elektrischen Maschine kann die Hülse auf dem Rotor aufgepresst oder aufgeschrumpft oder mit dem Rotor verschweißt sein. Bevorzugt wird das Aufpressen der Hülse auf den Rotor beziehungsweise die Rotorwelle.

Eine Variante der erfindungsgemäßen elektrischen Maschine sieht vor, dass die Hülse in Axialrichtung über den Endabschnitt des Rotors hinausragt. Dadurch kann die Hülle als Aufnahme für einen mit dem Rotor drehbaren Ring der oben genannten Gleitringdichtung (Primärdichtung) fungieren. Dazu kann der Ring in dem überstehenden Abschnitt der Hülse 10 eingeklemmt sein, so dass der Ring an dem Rotor beziehungsweise der Rotorwelle befestigt ist.

Die oben genannte Aufgabe wird ferner mit einem Antriebsstrang für ein Fahrzeug gelöst, der eine elektrische Maschine gemäß der Erfindung aufweist. Zusätzlich kann der Antriebsstrang über ein mit der elektrischen Maschine gekoppeltes Getriebe und/oder einen mit der Maschine verbundenen Wechselrichter verfügen, mit dem eine zum Betreiben der elektrischen Maschine benötigte mehrphasige Wechselspannung bereitstellbar ist.

Die Aufgabe wird weiterhin mit einem Fahrzeug gelöst, das einen derartigen Antriebsstrang aufweist. Die elektrische Maschine des Antriebsstrangs kann ein Rad oder eine Achse des Fahrzeugs antreiben. Bei dem Fahrzeug handelt es sich zum Beispiel um ein Straßenfahrzeug, ein Wasserfahrzeug oder ein Luftfahrzeug.

Die Erfindung betrifft darüber hinaus ein Verfahren zum Betreiben einer elektrischen Maschine mit einem Gehäuse, in dem ein Stator und ein bezüglich des Stators drehbarer Rotor aufgenommen sind, einer Kühleinrichtung mit einem von einem Kühlmittel durchströmbaren Kühlkanal, der sich von einem Einlass durch das Gehäuse und durch den Rotor bis zu einem Auslass erstreckt, und einer Abdichteinrichtung zum Abdichten des Rotors gegenüber einem Innenraum des Gehäuses.

Das erfindungsgemäße Verfahren zeichnet sich dadurch aus, dass beim Drehen des Rotors bezüglich des Stators ein Radialwellendichtring der Abdichteinrichtung auf einer Hülse gleitet, die einen Endabschnitt des Rotors umgibt, wobei der Radialwellendichtring die Hülse umgibt.

Die im Zusammenhang mit der Beschreibung der elektrischen Maschine erläuterten Vorteile und Einzelheiten gelten sinngemäß selbstverständlich auch für das erfindungsgemäße Verfahren.

Die Erfindung wird nachfolgend anhand eines Ausführungsbeispiels unter Bezugnahme auf die Figuren erläutert. Die Figuren sind schematische Darstellungen und zeigen:
- Fig. 1: eine perspektivische geschnittene Ansicht einer erfindungsgemäßen elektrischen Maschine;
- Fig. 2: eine vergrößerte Ansicht des in Fig. 1 rechten Endes des Rotors;
- Fig. 3: ein Detail der Abdichteinrichtung; und
- Fig. 4: ein erfindungsgemäßes Fahrzeug.

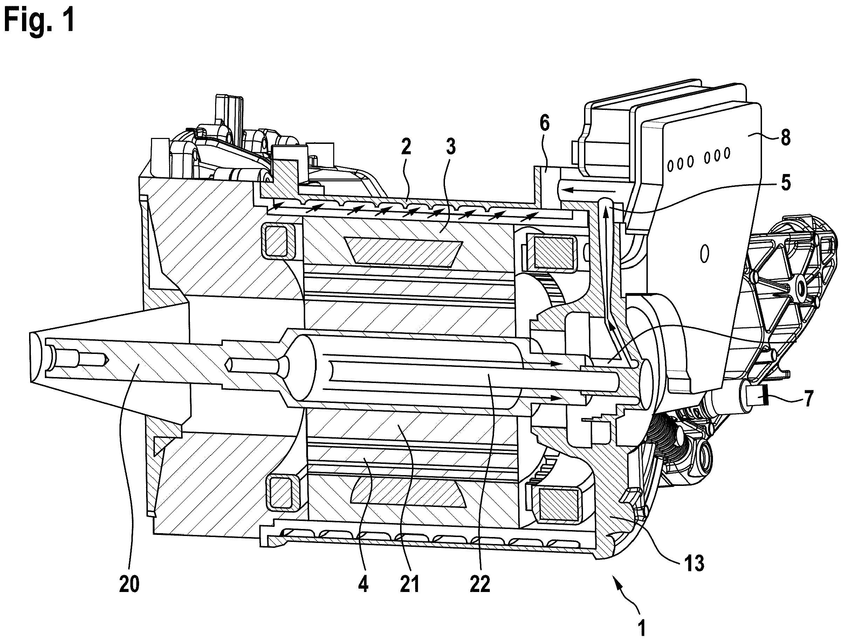

Die in **Fig. 1** in einer perspektivischen geschnittenen Ansicht gezeigte elektrische Maschine 1 gehört zum Antrieb eines Fahrzeugs. Alternativ dazu kann die elektrische Maschine 1 auch eine andere Funktion haben.

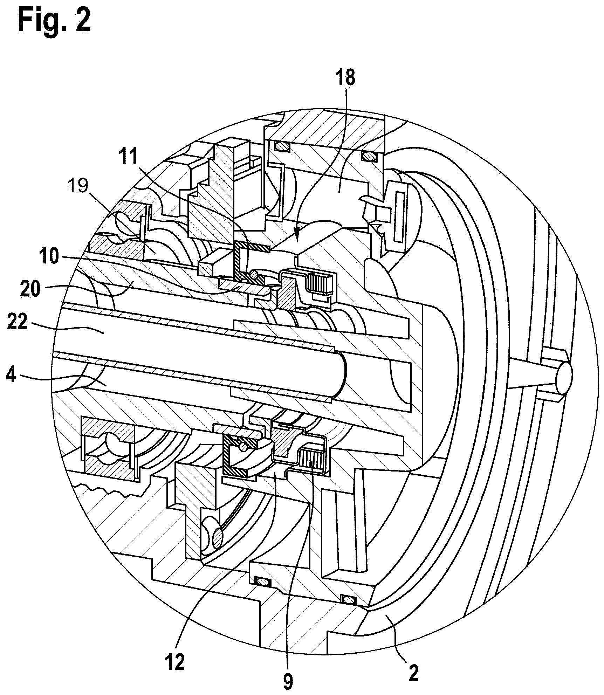

Die elektrische Maschine 1 umfasst ein Gehäuse 2 mit einem Innenraum 22 (siehe Figur 2), in dem ein Stator 3 und ein drehbarer Rotor 4 mit einer Rotorwelle 23 aufgenommen sind. Die Rotorwelle 23 ist von einem zylinderförmigen Rotorkörper 24 umschlossen. Die elektrische Maschine 1 umfasst weiterhin eine Kühleinrichtung mit einem von einem Kühlmittel durchströmbaren Kühlkanal 5, der sich von einem Einlass 7 durch das Gehäuse 2 bis zu einem Auslass 6 erstreckt.

Der Einlass 7 und der Auslass 6, die auch miteinander vertauscht sein können, sind über nicht dargestellte Kühlmittelleitungen mit einer Pumpe verbunden, sodass das Kühlmittel in einem Kreislauf gefördert wird. Das Kühlmittel führt bei dem Betrieb der elektrischen Maschine 1 erzeugte Wärme ab.

In Fig. 1 erkennt man, dass sich der Kühlkanal 5 von dem Einlass 7 durch das Gehäuse 2 erstreckt. Das Kühlmittel strömt durch ein Kühlrohr 25 (auch als "Lanze" bezeichnet) in die hohle Rotorwelle 23 des Rotors 4 hinein. Am Ende des Kühlrohrs 25 wird die Strömungsrichtung des Kühlmittels umgekehrt, wonach das Kühlmittel an einer Innenwand der Rotorwelle 23 entlang an einer Abdichteinrichtung 21 (siehe Figur 2) vorbei aus der Rotorwelle 23 herausströmt und weiter zum Auslass 6 gelangt. Alternativ dazu kann das Kühlmittel auch am entgegengesetzten Ende der Rotorwelle 23 aus dieser herausströmen.

An der Außenseite des Gehäuses 2 ist ein Wechselrichter 8 angeordnet, der die für den Betrieb der elektrischen Maschine 1 benötigte mehrphasige Wechselspannung bereitstellt.

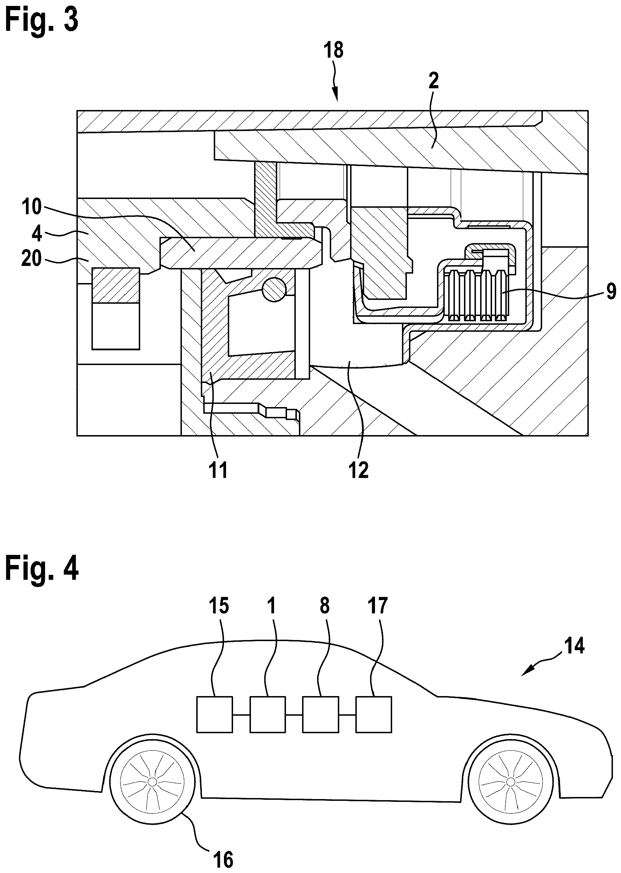

**Fig. 2** ist eine geschnittene Ansicht und zeigt das rechte Ende des Rotors 4 beziehungsweise der Rotorwelle 23 aus Fig. 1. Dabei kann es sich insbesondere um das einem Getriebe abgewandte Ende handeln. **Fig. 3** zeigt ein Detail der Abdichteinrichtung 21, die zum Abdichten der Rotorwelle 23 in Radialrichtung und Axialrichtung gegenüber dem Innenraum 22 des Gehäuses 2 dient, in dem der Stator 3 aufgenommen ist. Mit dem Abdichten wird vermieden, dass Kühlmittel in den Innenraum 22 gelangt und dort beispielsweise zu Korrosion der Wicklungen des Stators 3 führt.

Die Abdichteinrichtung 21 umfasst eine Gleitringdichtung 9 und einen Radialwellendichtring 11. Die Gleitringdichtung 9 ist in Axialrichtung zwischen dem (in Fig. 2 rechten) freien Ende der Rotorwelle 23 und einem Abschnitt des Gehäuses 2 angeordnet. Die Gleitringdichtung 9 dichtet die Rotorwelle 23 axial ab und fungiert als Primärdichtung.

Der Endabschnitt der Rotorwelle 23 ist von einer Hülse 10 umschlossen, die wiederum von einem Radialwellendichtring 11 der Abdichteinrichtung 21 umschlossen ist. Der Radialwellendichtring 11 dichtet die Rotorwelle 23 radial gegenüber dem Innenraum 22 des Gehäuses 2 ab und fungiert als Sekundärdichtung. Insbesondere bildet der Radialwellendichtring 11 eine Barriere für Kühlmittelleckage, die an der Gleitringdichtung 9 aus dem Kühlkreislauf ausgetreten ist und sich zwischen dem Radialwellendichtring 11 und dem Gehäuse 2 gesammelt hat.

Die Hülse 10 hat besondere Eigenschaften bezüglich Rauheit und Härte, um die Funktion des Radialwellendichtrings 11 zu gewährleisten. So weist die Hülse 10 eine besonders geringe Oberflächenrauheit von 0,2 µm auf. Ferner ist die Hülse 10 aus einer nicht rostenden Stahllegierung hergestellt, es handelt sich dabei um martensitischen Chromstahl mit der Werkstoffnummer 1.4034. Durch die Wahl dieses Werkstoffs ist die Hülse vor Korrosion geschützt. Weiterhin ist die Hülse gehärtet und drallfrei geschliffen.

Daher kann davon ausgegangen werden, dass die hohe Oberflächengüte der Hülse während einer langen Betriebsdauer bestehen bleibt. Indem eine vor Korrosion geschützte Hülse verwendet wird, wird vermieden, dass Rostpartikel in den Kühlkreislauf oder in ein Lager des Rotors gelangen.

Weiterhin ist die Hülse 10 auf den Rotor 4 aufgepresst. In Figur 2 erkennt man außerdem, dass die Hülse 10 in Axialrichtung über den Endabschnitt des Rotors 4 hinausragt.

Zwischen der Gleitringdichtung 9, dem Radialwellendichtung 11 und dem die Dichtungen umgebenden Abschnitt im Inneren des Gehäuses 2 ist ein umlaufender Freiraum gebildet. Ein im Einbauzustand der elektrischen Maschine unten liegender Bereich des Freiraums dient als Reservoir 12 für Kühlmittelleckage, die auch als technische Leckage bezeichnet wird und in bestimmten Betriebszuständen der elektrischen Maschine auftreten kann. Die technische Leckage sammelt sich in dem Reservoir 12 an.

Die Gleitringdichtung 9 umfasst einen feststehenden Ring 13 und, als dessen Gegenstück, einen mit dem Rotor 4 drehbaren Ring 14 aus einem Keramikmaterial. Der drehbare Ring 14 ist mit der Rotorwelle 23 fest verbunden. Dazu ist der drehbare Ring 14 im überstehenden Abschnitt der Hülse 10 eingeklemmt, insbesondere in einem zwischen der Hülse 10 und dem drehbaren Ring 14 angeordneten Zwischenring 15 aus einem Gummimaterial, auf den jedoch auch verzichtet werden kann. Das heißt, die Hülse 10 umschließt den Zwischenring 15 entlang einer sich axial erstreckenden Kontaktfläche 16 und der Zwischenring 15 umschließt den drehbaren Ring 14, so dass der drehbare Ring 14 an der Rotorwelle 23 befestigt ist.

Beim Drehen des Rotors 4 bezüglich des Stators 3 gleitet der die Hülse 10 umgebende Radialwellendichtring 11 der Abdichteinrichtung 21 auf der Hülse 10, die einen Endabschnitt des Rotors 4 umgibt.

Fig. 4 zeigt ein Fahrzeug 17 mit einem Antriebsstrang, der die elektrische Maschine 1 und ein Getriebe 18 umfasst. Die elektrische Maschine 1 ist über das Getriebe 18 mit einem Rad 19 des Fahrzeugs 17 gekoppelt. Daneben ist die elektrische Maschine 1 mit dem Wechselrichter 8 verbunden. Die von einer Batterie 20 gelieferte Gleichspannung wird mit dem Wechselrichter 8 in eine mehrphasige Wechselspannung für den Betrieb der elektrischen Maschine 1 umgewandelt.

### Bezugszeichenliste

- 1: elektrische Maschine
- 2: Gehäuse
- 3: Stator
- 4: Rotor
- 5: Kühlkanal
- 7: Einlass
- 6: Auslass
- 8: Wechselrichter
- 9: Gleitringdichtung
- 10: Hülse
- 11: Radialwellendichtring
- 12: Reservoir
- 13: feststehender Ring
- 14: drehbarer Ring
- 15: Zwischenring
- 16: Kontaktfläche
- 17: Fahrzeug
- 18: Getriebe
- 19: Rad
- 20: Batterie
- 21: Abdichteinrichtung
- 22: Innenraum
- 23: Rotorwelle
- 24: Rotorkörper
- 25: Kühlrohr

## Patentansprüche

1. Elektrische Maschine (1), umfassend:
- ein Gehäuse (2), in dem ein Stator (3) und ein bezüglich des Stators (3) drehbarer Rotor (4) aufgenommen sind,
- eine Kühleinrichtung mit einem von einem Kühlmittel durchströmbaren Kühlkanal (5), der sich von einem Einlass (7) durch das Gehäuse (2) und durch den Rotor (4) bis zu einem Auslass (6) erstreckt, und
- eine Abdichteinrichtung (21) zum Abdichten des Rotors (4) gegenüber einem Innenraum (22) des Gehäuses (2),
**dadurch gekennzeichnet, dass** ein Endabschnitt des Rotors (4) von einer Hülse (10) umgeben ist, die von einem Radialwellendichtring (11) der Abdichteinrichtung (21) umgeben ist.

2. Elektrische Maschine nach Anspruch 1, wobei die Abdichteinrichtung (21) zum Abdichten des Rotors (4) in eine Radialrichtung und eine Axialrichtung ausgebildet ist.

3. Elektrische Maschine nach Anspruch 1 oder 2, wobei die Oberflächenrauheit der Hülse (10) 0,1 bis 0,32 um beträgt.

4. Elektrische Maschine nach einem der vorangehenden Ansprüche, wobei die Hülse (10) aus einer nichtrostenden Stahllegierung hergestellt ist.

5. Elektrische Maschine nach Anspruch 4, wobei die Hülse (10) aus nichtrostendem martensitischen Chromstahl mit der Werkstoffnummer 1.4034 oder 1.4035 hergestellt ist.

6. Elektrische Maschine nach Anspruch 4 oder 5, wobei die Hülse (10) gehärtet ist oder eine verschleißfeste Beschichtung aufweist.

7. Elektrische Maschine nach einem der vorangehenden Ansprüche, wobei die Hülse (10) auf den Rotor (4) aufgepresst oder aufgeschrumpft oder mit dem Rotor (4) verschweißt ist.

8. Elektrische Maschine nach einem der vorangehenden Ansprüche, wobei die Hülse (4) in Axialrichtung über den Endabschnitt des Rotors (4) hinausragt.

9. Antriebsstrang für ein Fahrzeug (17), der eine elektrische Maschine (1) nach einem der Ansprüche 1 bis 8 aufweist.

10. Fahrzeug (17) mit einem Antriebsstrang nach Anspruch 9.

11. Verfahren zum Betreiben einer elektrischen Maschine (1) mit einem Gehäuse (2), in dem ein Stator (3) und ein bezüglich des Stators (3) drehbarer Rotor (4) aufgenommen sind, einer Kühleinrichtung mit einem von einem Kühlmittel durchströmbaren Kühlkanal (5), der sich von einem Einlass (7) durch das Gehäuse (2) und durch den Rotor (4) bis zu einem Auslass (6) erstreckt, und einer Abdichteinrichtung (21) zum Abdichten des Rotors (4) gegenüber einem Innenraum (22) des Gehäuses (2), **dadurch gekennzeichnet, dass** beim Drehen des Rotors (4) bezüglich des Stators (3) ein eine Hülse (10) umgebender Radialwellendichtring (11) der Abdichteinrichtung (21) auf der Hülse (10), die einen Endabschnitt des Rotors (4) umgibt, gleitet.
